# EUROPÄISCHE PATENTSCHRIFT

(11) **EP 1 359 076 B1**
(45) Veröffentlichungstag und Bekanntmachung des Hinweises auf die Patenterteilung: **21.12.2005**
(21) Anmeldenummer: 03003980.4
(22) Anmeldetag: 22.02.2003
(51) Int. Cl.: B60T 8/00, B60T 8/18, B60T 8/32

(54) **Verfahren und Anordnung zur Zuspannenergieregelung bei elektronisch geregelten Bremssystemen von Fahrzeugkombinationen aus wenigstens einem Zug- und Anhängefahrzeug**
Method and apparatus for controlling the brake application energy of electronic controlled braking systems of combinations of at least one tractor and one trailer
Procédé et dispositif de commande d'énergie d'actionnement de frein des systèmes de freinage à commande électronique pour combinaisons de au moins un tracteur et une remorque

(30) Priorität: 29.04.2002 DE 10219040
(43) Veröffentlichungstag der Anmeldung: 05.11.2003
(73) Patentinhaber: WABCO GmbH & CO. OHG, 30453 Hannover (DE)
(72) Erfinder: Eckert, Horst, 31547 Rehburg-Loccum (DE); Gaulke, Arnd, 30952 Ronnenberg (DE)
(74) Vertreter: Schrödter, Manfred

(56) Entgegenhaltungen:
- EP-A- 0 189 082
- EP-A- 0 288 846
- DE-A- 19 726 116

## Beschreibung

Die Erfindung betrifft ein Verfahren zur Zuspannenergieregelung bei elektronisch geregelten Bremssystemen von Fahrzeugkombinationen aus wenigstens einem Zug- und Anhängefahrzeug gemäß Oberbegriff des Anspruchs 1. Die Erfindung betrifft ferner eine Anordnung zur Durchführung des Verfahrens.

Es ist bekannt, bei Fahrzeugkombinationen aus einem Zug- und Anhängefahrzeug einer elektronischen Zuspannenergieregelung eine Koppelkraftregelung (KKR) zu überlagern, durch die der Anhängersolldruck geregelt wird. Ziel dieser Koppelkraftregelung ist eine Koppelkraft Null, d. h., dass bei einer Bremsung über die Anhängerkupplung keine oder nur eine Kraft von geringer Größe (Toleranzbereich) vom Anhängefahrzeug auf das Zugfahrzeug oder umgekehrt übertragen wird. Treten bei solchen Koppelkraftregelungen der Zuspannenergie zwischen den Radbremsen des Zugfahrzeugs und des Anhängefahrzeugs unterschiedliche Radbremsentemperaturen auf, insbesondere hervorgerufen durch unterschiedliche Beladungsverteilung zwischen Zugfahrzeug und Anhängefahrzeug, so sind die Bremskräfte der heißeren Radbremsen kleiner als die Bremskräfte der Radbremsen mit den niedrigeren Temperaturen, wodurch sich eine Koppelkraft ungleich Null einstellt. Die Koppelkraftregelung, deren Regelungsziel eine Koppelkraft von Null ist, bewirkt nur eine Verlagerung von zu erbringender Bremsarbeit auf das Teilfahrzeug mit den heißeren Radbremsen. Es besteht somit eine erhöhte Gefahr einer Überlastung und eines Ausfalls von Radbremsen. Wenn die Temperaturen der Radbremsen einen definierten Grenzwert überschreiten, besteht die Gefahr einer Überlastung und eines Ausfalls der Bremsen.

Aus der EP 0 288 846 A2 ist ein Verfahren zur Zuspannenergieregelung bei elektronisch geregelten Bremssystemen von Fahrzeugkombinationen, die aus wenigstens einem Zug- und einem Anhängefahrzeug bestehen, bekannt. Dabei werden Temperaturen der Radbremsen der Räder der Teilfahrzeuge ermittelt und fahrzeugweise miteinander verglichen. Falls die genannten Temperaturen wenigstens um einen vorbestimmten Wert voneinander abweichen, wird eine niedrigere Zuspannenergie in die Radbremsen desjenigen Teilfahrzeugs eingesteuert, dessen Temperaturen den höheren Wert aufweisen.

Die Aufgabe der vorliegenden Erfindung besteht deshalb darin, ein Verfahren der eingangs genannten Art so auszubilden, dass bei einem Bremsvorgang die Gefahr einer Überhitzung bzw. Überlastung und eines dadurch bedingten Ausfalls von Bremsen bei einer Fahrzeugkombination vermieden ist. Außerdem soll eine Anordnung zur Durchführung des Verfahrens angegeben werden.

Diese Aufgabe wird durch die Erfindung gemäß Anspruch 1 gelöst. Eine Anordnung zur Durchführung des Verfahrens ist im Anspruch 9 angegeben.

Vorteilhafte und zweckmäßige Weiterbildungen der Aufgabenlösung sind in den Unteransprüchen angegeben.

Die erfindungsgemäße Lösung sieht vor, die Temperatur der Radbremsen sowohl des Zugfahrzeuges als auch des Anhängefahrzeuges zu ermitteln und mit einem Temperaturgrenzwert zu vergleichen und die Bremsdruckeinsteuerung in das Anhängefahrzeug und/oder Zugfahrzeug so zu regeln, dass die Radbremsen des Teilfahrzeuges mit der höheren Temperatur relativ geschont werden, also in die entsprechenden Radbremsen geringere Zuspannenergie eingesteuert wird. Die Erfindung schlägt also vor, bei einer Fahrzeugkombination aus Zug- und Anhängefahrzeug neben den bekannten Koppelkraftregelkriterien übergeordnet Radbremsentemperaturregelkriterien vorzusehen, derart, dass das Regelungsziel in jeder Situation grundsätzlich oder bei Vorhandensein einer Koppelkraftregelung nicht mehr ausschließlich eine Koppelkraft Null, sondern eine relative Schonung der Radbremsen des Teilfahrzeuges mit den heißeren Radbremsen, wenn deren Temperaturen einen Grenzwert überschreiten und sich von den Temperaturen der Radbremsen des anderen Teilfahrzeuges definiert unterscheiden. D. h., dass bspw. in die Radbremsen des Anhängefahrzeuges eine niedrigere Zuspannenergie eingesteuert wird als vor dem Überschreiten des Temperaturgrenzwertes, wenn die Radbremsentemperaturen des Anhängefahrzeuges größer sind als die Radbremsentemperaturen des Zugfahrzeuges, und eine höhere Zuspannenergie in die Radbremsen des Anhängefahrzeuges eingesteuert wird als vor dem Oberschreiten des Temperaturgrenzwertes, wenn die Radbremsentemperaturen des Anhängefahrzeuges kleiner sind als die Radbremsentemperaturen des Zugfahrzeuges. Die Radbremsen mit den höheren Temperaturen werden also geringer belastet als vor der Grenzwertüberschreitung, um auf diese Weise den Temperaturunterschied zwischen den Radbremsen zu verringern. Es wird also in diesem Fall nicht auf die Koppelkraft Null geregelt; es wird stattdessen in einem solchen Fall eine Koppelkraft ungleich Null hervorgerufen.

Die Anhänger-Zuspannenergie bzw. die Anhängersollzuspannung werden auβer in Abhängigkeit von den Temperaturdifferenzen und Temperaturhöhen in Abhängigkeit vom Verhältnis der Spitzentemperaturen einer oder mehrerer Radbremsen zur Durchschnittstemperatur aller Radbremsen der Teilfahrzeuge oder in Abhängigkeit von der Höhe der absoluten Spitzentemperatur einer oder mehrerer Bremsen der Teilfahrzeuge geändert.

Vorzugsweise werden die teilfahrzeugbezogenen Mittelwerte der Temperaturen der Radbremsen verglichen und ausgewertet.

Die Temperaturen der Radbremsen werden mittels Temperatursensoren ermittelt oder nach einem Temperaturmodell unter Berücksichtigung eines den Belastungszustand der Bremsen repräsentierenden Lastsignals oder der Wärmezufuhr zu den Bremsen oder der Verformung von Bauteilen der Bremsen oder der momentanen Fahrzeugverzögerung und der Fahrzeuggeschwindigkeit oder anderer geeigneter Parameter berechnet.

Die Vorteile der Erfindung liegen insbesondere darin, dass die Radbremsen geschont werden, der Bremsbelagverschleiß verringert wird, die Gefahr einer thermischen Zerstörung von Radbremsenkomponenten, wie Bremsscheiben, vermieden ist, Spitzentemperaturen für die Radbremsen und damit auch für deren Umgebung verringert werden und die Sicherheit der Bremsanlagen erhöht wird.

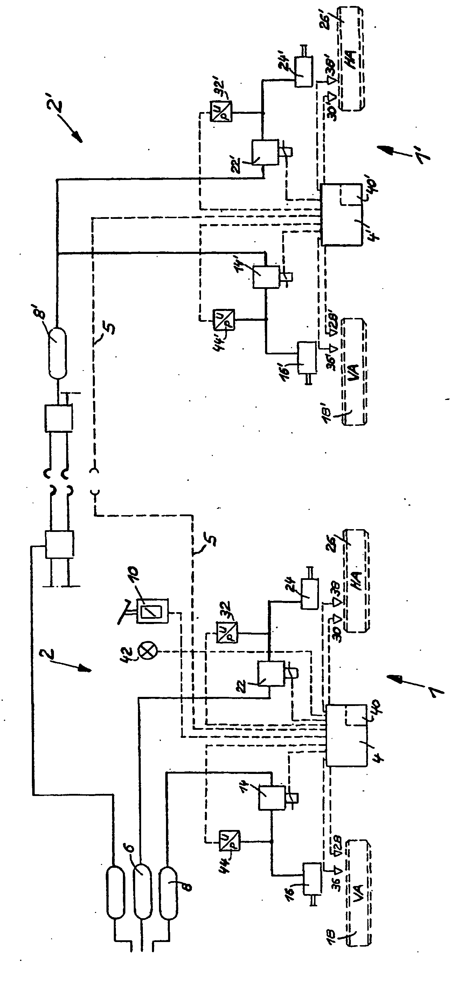

Die Erfindung soll nachfolgend anhand der beigefügten Zeichnung, in der ein Ausführungsbeispiel dargestellt ist, näher erläutert werden.

Die Zeichnung zeigt schematisch eine Fahrzeugkombination aus einem Zugfahrzeug 1 und einem Fahrzeuganhänger 1' mit jeweils einer bspw. pneumatisch betriebenen EBS-Bremsanlage 2, 2' mit einem Zentralsteuergerät 4, 4' für die Zuspannenergie-Regelung, in dem i. A. auch das ABS-System integriert ist. Die Zentralsteuergeräte 4, 4' sind über eine Signalleitung 5 miteinander verbunden. Energieleitungen, bspw. Druckleitungen, sind mit durchgezogenen Linien und elektrische Leitungen bzw. Signalleitungen sind mit gestrichelten Linien gezeichnet. Es sind nur die Räder und zugehörigen Bauteile, bspw. pneumatischen Bauteile, einer Seite der Vorderachsen VA, VA' und der Hinterachsen HA, HA' der Teilfahrzeuge 1, 1' der Fahrzeugkombination dargestellt.

Die zur Betätigung der Bremsen benötigte Energie, bspw. Druckluft, wird in Energiespeichern 6, 8, 8' bspw. Druckluftbehältern, bereitgestellt. Über einen Fahrer-Bremswertgeber 10 im Zugfahrzeug 1 gibt der Fahrer dem EBS-System einen Sollwert vor. Die Bremskreise sind jeweils zweikreisig ausgebildet und führen zum einen über Energiezuteiler 14, 14', bspw. Druckmodulatoren, zu einer Zuspanneinrichtung 16, 16', bspw. Bremszylinder, für Räder mit Radbremsen 18, 18' der Vorderachsen. Die anderen Bremskreise führen über weitere Energiezuteiler 22, 22', bspw. Druckmodulatoren, zu Zuspanneinrichtungen 24, 24', bspw. Bremszylindern, für Räder mit Radbremsen 26, 26' der Hinterachsen. Die Antiblockiersysteme erhalten über Radsensoren 28, 28', 30, 30' Informationen über das Drehverhalten der Räder. Sollten diese ein Blockierneigung zeigen, geben die Steuergeräte 4, 4' bzw. die in die Steuergeräte integrierten ABS-Systeme in bekannter Weise elektrische Signale an die Energiezuteiler 14, 14', 22, 22', bspw. Druckmodulatoren, aus, welche die Zuspannenergie, bspw. den Bremsdruck, herabsetzen und somit die Blockierneigung wieder beseitigen können.

Die Zentralsteuereinheiten 4, 4' besitzen Eingänge für Energiesensoren 32, 32', 44, 44', bspw. Drucksensoren, zur Ermittlung der Zuspannenergien, bspw. der Bremsdrücke, in den Zuspanneinrichtungen 16, 16', 24, 24', bspw. Bremszylindern, der Vorder- und Hinterachsen.

Die Zentralsteuereinheiten 4, 4' weisen ferner Eingänge für Einrichtungen 36, 36', 38, 38' zur vorzugsweise ständigen Ermittlung der Temperaturen der Radbremsen, bspw. Temperatursensoren, auf. In einer der Zentralsteuereinheiten 4, 4' werden die ermittelten Temperaturen der Radbremsen der Räder der Teilfahrzeuge 1, 1' fahrzeugweise miteinander und mit einem vorbestimmten Temperaturgrenzwert verglichen. Wird festgestellt, dass die Temperaturen voneinander um wenigstens einen vorbestimmten Wert abweichen und die Temperaturen der Radbremsen wenigstens eines Teilfahrzeuges 1, 1' den Temperaturgrenzwert bei einem Bremsvorgang überschreiten, wird in die Radbremsen des Teilfahrzeuges, bspw. Anhängefahrzeuges, dessen Radbremsentemperaturen größer sind als die Radbremsentemperaturen des anderen Teilfahrzeuges, bspw. Zugfahrzeuges, eine niedrigere Zuspannenergie eingesteuert als vor dem Überschreiten des Temperaturgrenzwertes und wird eine höhere Zuspannenergie in die Radbremsen des Teilfahrzeuges, bspw. Anhängefahrzeuges, eingesteuert als vor dem Überschreiten des Temperaturgrenzwertes, wenn die Radbremsentemperaturen dieses Teilfahrzeuges, bspw. Anhängefahrzeuges, kleiner sind als die Radbremsentemperaturen des anderen Teilfahrzeuges, bspw. Zugfahrzeuges. Hierzu kann wenigstens eine geeignete zusätzliche elektronische Einrichtung 40, 40' im Zentralsteuergerät 4, 4' und/oder eine entsprechende Programmerweiterung der im Zentralsteuergerät enthaltenen Mikroprozessoren vorgesehen sein. Die entsprechende Zuspannenergieverteilung zwischen den Radbremsen der Teilfahrzeuge 1, 1', bspw. durch verringerte Druckeinsteuerung in die Bremszylinder der einzelnen Bremsen, erfolgt vorzugsweise über die Energiezuteiler 14, 14', 22, 22', bspw. Druckmodulatoren, der EBS-Systeme, kann aber auch über gesonderte Energiezuteiler (nicht dargestellt) erfolgen.

Das Programm des EBS-Systems kann dahingehend ausgelegt werden, dass die Anhänger-Sollzuspannenergie oder die Zugfahrzeug-Sollzuspannenergie in Abhängigkeit von den ermittelten Radbremsentemperaturen verringert oder erhöht wird.

Das Programm kann so ausgelegt werden, dass bei Verringerung der Anhängefahrzeug-Sollzuspannenergie gleichzeitig die Zugfahrzeug-Sollzuspannenergie erhöht wird und dass bei Erhöhung der Anhängefahrzeug-Sollzuspannenergie gleichzeitig die Zugfahrzeug-Sollzuspannenergie verringert wird.

Die Änderungen der Sollzuspannenergien der Teilfahrzeuge können dabei gesamtbremskraftneutral oder gesamtbremskraftverringernd erfolgen.

Vorzugsweise werden aus den ermittelten Temperaturen der Radbremsen teilfahrzeugbezogene Mittelwerte gebildet, die miteinander und mit dem Temperaturgrenzwert verglichen werden.

Außer in Abhängigkeit von den Temperaturdifferenzen und Temperaturhöhen kann die Zuspannenergie bzw. Sollzuspannenergie in Abhängigkeit vom Verhältnis von Spitzentemperaturen einer oder mehrerer Radbremsen zur mittleren Temperatur aller Radbremsen der Teilfahrzeuge oder in Abhängigkeit von der Höhe der absoluten Spitzentemperaturen einer oder mehrerer Radbremsen der Teilfahrzeuge geändert werden.

Zusätzlich kann parallel zur temperaturabhängigen Bremsregelung eine Warnung des Fahrers bspw. über eine optische und/oder akustische Anzeige vorgesehen sein.

Die Temperatur kann auf verschiedene Weise direkt oder indirekt über Temperaturmodelle erfasst werden:
- Ermittlung der Temperatur mit Hilfe von Temperatursensoren, die in unmittelbarer Nähe eines der Bremselemente, bspw. der Bremsscheibe, angeordnet sind,
- Ermittlung der Temperatur über ein den Belastungszustand der Bremse repräsentierendes Lastsignal, das die Fahrzeuggeschwindigkeit mit der Anpresskraft der Bremsscheibe verknüpft, woraus die resultierende Temperaturerhöhung der Bremsscheibe ermittelt und ein voreingestellter Temperatureingangswert entsprechend erhöht wird,
- Ermittlung der Temperatur durch Berechnung der Wärmeenergiezufuhr zu der Bremse aus der Abnahme der kinetischen Energie des Fahrzeugs beim Bremsvorgang,
- Ermittlung der Temperatur aus der Verformung von Bauteilen der Bremse,
- Ermittlung der Temperatur aus der momentanen Fahrzeugverzögerung und der Fahrzeuggeschwindigkeit,
- Auswahl eines Bauteils, dessen Temperatur ermittelt wird, derart, dass diese Temperatur den thermischen Belastungsstand der Bremse wiederspiegelt, woraus auf die Temperatur geschlossen werden kann.

## Patentansprüche

1. Verfahren zur Zuspannenergieregelung bei elektronisch geregelten Bremssystemen (2, 2') von Fahrzeugkombinationen au s wenigstens einem Zug- und Anhängefahrzeug (1, 1'), ggf. mit einer Koppelkraftregelung zur Anpassung oder wenigstens weitgehenden Anpassung der durch die Anhängefahrzeugbremse bewirkten Anhängefahrzeugverzögerung an die durch die Zugfahrzeugbremse (18, 26) bewirkten Zugfahrzeugverzögerung, so dass bei einer Bremsung über die Kupplung zwischen Zug- und Anhängefahrzeug (1, 1') keine oder nur eine Kraft von zulässiger Größe vom Anhängefahrzeug (1') auf das Zugfahrzeug (1) und umgekehrt übertragen wird, **gekennzeichnet durch** folgende Merkmale:
- die Temperaturen der Radbremsen (18, 26, 18', 26') der Räder der Teilfahrzeuge werden ermittelt und fahrzeugweise miteinander und mit einem vorbestimmten Temperaturgrenzwert verglichen,
- bei fahrzeugweise voneinander wenigstens um einen vorbestimmten Wert abweichenden Temperaturen und bei Überschreitung des Temperaturgrenzwertes **durch** die Temperaturen der Radbremsen (18, 26, 18', 26') wenigstens eines Teilfahrzeuges (1, 1') wird eine niedrigere Anhängefahrzeug-Zuspannenergie in die Radbremsen des Anhängefahrzeuges (1') eingesteuert als vor dem Überschreiten des Termperaturgrenzwertes, wenn die Radbremsentemperaturen des Anhängefahrzeuges (1') größer sind als die Radbremsentemperaturen des Zugfahrzeuges (1), und eine höhere Anhängefahrzeug-Zuspannenergie in die Radbremsen des Anhängefahrzeuges (1') eingesteuert als vor dem Überschreiten des Temperaturgrenzwertes, wenn die Radbremsentemperaturen des Anhängefahrzeuges (1') kleiner als die Radbremsentemperaturen des Zugfahrzeuges (1) sind oder eine niedrigere Zugfahrzeug-Zuspannenergie in die Radbremsen des Zugfahrzeuges (1) eingesteuert als vor dem Überschreiten des Temperaturgrenzwertes, wenn die Radbremsentemperaturen des Zugfahrzeuges (1) größer sind als die Radbremsentemperaturen des Anhängefahrzeuges (1'), und eine höhere Zugfahrzeug-Zuspannenergie in die Radbremsen des Zugfahrzeuges (1) eingesteuert als vor dem Überschreiten des Temperaturgrenzwertes, wenn die Radbremsentemperaturen des Zugfahrzeuges (1) kleiner als die Radbremsentemperaturen des Anhängefahrzeuges (1') sind,
- bei einer ggf. vorhandenen Koppelkraftregelung der im Oberbegriff genannten Art, deren Regelungsziel eine Koppelkraft von Null oder von nur geringer zulässiger Größe ist, wird die Koppelkraftregelung deaktiviert oder **durch** die Koppelkraftregelung eine Koppelkraft geregelt, die nicht Null ist, sondern deren Größe von den temperaturbedingten Änderungen der Zuspannenergien der Teilfahrzeuge (1, 1') der Fahrzeugkombination abhängt;
- die Zuspannenergien bzw. die Sollzuspannenergien werden außer in Abhängigkeit von der Temperaturdifferenz und der Temperaturhöhe in Abhängigkeit vom Verhältnis der Spitzentemperatur einer oder mehrerer Radbremsen (18, 18', 26, 26') zur mittleren Temperatur aller Radbremsen der Teilfahrzeuge (1, 1') oder in Abhängigkeit von der Höhe der absoluten Spitzentemperaturen eines oder mehrerer Radbremsen der Teilfahrzeuge (1, 1') geändert.

2. Verfahren nach Anspruch 1, **dadurch gekennzeichnet, dass** aus den ermittelten Temperaturen der Radbremsen (18, 18', 26, 26') teilfahrzeugbezogene Mittelwerte gebildet werden, die miteinander und mit dem Temperaturgrenzwert verglichen werden.

3. Verfahren nach Anspruch 1, **dadurch gekennzeichnet, dass** die Anhänger-Sollzuspannenergie verringert oder erhöht wird.

4. Verfahren nach Anspruch 1, **dadurch gekennzeichnet, dass** die Zugfahrzeug-Sollzuspannenergie verringert oder erhöht wird.

5. Verfahren nach Anspruch 1, **dadurch gekennzeichnet, dass** bei Verringerung der Anhängefahrzeug-Sollzuspannenergie gleichzeitig die Zugfahrzeug-Sollzuspannenergie erhöht wird und bei Erhöhung der Anhängefahrzeug-Sollzuspannenergie gleichzeitig die Zugfahrzeug-Sollzuspannenergie verringert wird.

6. Verfahren nach Anspruch 5, **dadurch gekennzeichnet, dass** die Änderungen der Sollzuspannenergien der Teilfahrzeuge (1, 1') gesamtbremskraftneutral erfolgen.

7. Verfahren nach Anspruch 5, **dadurch gekennzeichnet, dass** die Änderungen der Sollzuspannenergien der Teilfahrzeuge (1, 1') gesamtbremskraftverringert erfolgen.

8. Verfahren nach Anspruch 1 oder 2, **dadurch gekennzeichnet, dass** die Temperatur der Radbremsen der Teilfahrzeuge (1, 1') mittels Temperatursensoren oder nach einem Temperaturmodell unter Berücksichtigung eines den Belastungszustand der Bremse repräsentierenden Lastsignals oder der Wärmeenergiezufuhr zu der Bremse oder der Verformung von Bauteilen der Bremse oder der momentanen Fahrzeugverzögerung und der Fahrzeuggeschwindigkeit oder anderer geeigneter Parameter ermittelt wird.

9. Anordnung zur Durchführung des Verfahrens nach einem der vorhergehenden Ansprüche mit einem Bremswertgeber (10) und mit wenigstens einem elektronisch geregelten Bremssystem (2, 2') auch EBS-System genannt, von Fahrzeugkombinationen aus wenigstens einem Zug- und Anhängefahrzeug (1, 1'), ggf. mit einer Einrichtung zur Koppelkraftregelung zur Anpassung oder wenigstens weitgehenden Anpassung der durch die Anhängefahrzeugbremse (18', 26') bewirkten Anhängefahrzeugverzögerung an die durch die Zugfahrzeugbremse (18, 26) bewirkten Zugfahrzeugverzögerung, sodass bei einer Bremsung keine oder nur eine Kraft von zulässiger Größe vom Anhängefahrzeug (1') auf das Zugfahrzeug (1) und umgekehrt übertragen wird, **dadurch gekennzeichnet, dass**
- Einrichtungen (36, 38, 36', 38') zur Ermittlung der Temperaturen der Radbremsen (18, 26, 18', 26') der Räder der Teilfahrzeuge (1, 1') vorgesehen sind, deren Signale in einem Zentralsteuergerät (4, 4') des EBS-Systems oder der EBS-Systeme (2, 2') oder in wenigstens einer separaten Auswerteeinrichtung (40, 40') fahrzeugweise miteinander und mit einem vorbestimmten Temperaturgrenzwert verglichen werden, und das Zentralsteuergerät (4, 4') oder die separate Auswerteeinrichtung (40, 40') Steuersignale abgibt, wenn die ermittelten Temperaturenfahrzeugweise voneinander um wenigstens einen vorbestimmten Wert abweichen und der Temperaturgrenzwert durch die Temperaturen der Radbremsen (18, 18', 26, 26') wenigsten eines Teilfahrzeuges (1, 1') überschritten wird, durch die eine niedrigere Anhängefahrzeug-Zuspannenergie in die Radbremsen (18', 26') des Anhängefahrzeuges (1') eingesteuert wird als vor dem Überschreiten des Temperaturgrenzwertes, wenn die Radbremsentemperaturen des Anhängefahrzeuges (1') größer sind als die Radbremsentemperaturen des Zugfahrzeuges (1), und durch die eine höhere Anhängefahrzeug-Zuspannenergie in Radbremsen (18', 26') des Anhängefahrzeuges (1') eingesteuert wird als vor dem Überschreiten des Temperaturgrenzwertes, wenn die Radbremsentemperaturen des Anhängefahrzeuges (1') kleiner als die Radbremsentemperaturen des Zugfahrzeuges (1) sind, oder eine niedrigere Zugfahrzeug-Zuspannenergie in die Radbremsen (18, 26) des Zugfahrzeuges (1) eingesteuert wird als vor dem Überschreiten des Temperaturgrenzwertes, wenn die Radbremsentemperaturen des Zugfahrzeuges (1) größer sind als die Radbremsen des Anhängefahrzeuges (1'), und eine höhere Zugfahrzeug-Zuspannenergie in die Radbremsen des Zugfahrzeuges (1) eingesteuert wird als vor dem Überschreiten des Temperaturgrenzwertes, wenn die Radbremsentemperaturen des Zugfahrzeuges (1) kleiner als die Radbremsentemperaturen des Anhängefahrzeuges (1') sind,
- wobei bei einer ggf. vorhandenen Koppelkraftregelung, deren Regelungsziel eine Koppelkraft von Null oder von nur geringer zulässiger Größe ist, die Koppelkraftregelung deaktiviert wird oder durch die Koppelkraftregelung eine Koppelkraft geregelt wird, die nicht Null ist, sondern deren Größe von den temperaturbedingten Änderungen der Zuspannenergien der Teilfahrzeuge (1, 1') der Fahrzeugkombination abhängt,
- und wobei das Zentralsteuer gerät (4, 4') oder die Auswerteeinrichtung (40, 40') zusätzlich die Spitzentemperaturen der Radbremsen (18, 26, 18', 26') ermittelt und sich die Zuspannenergien bzw. die Sollzuspannenergien in Abhängigkeit vom Verhältnis der Spitzentemperatur einer oder mehrerer Radbremsen zur mittleren Temperatur aller Radbremsen der Teilfahrzeuge (1, 1') oder in Abhängigkeit von der Höhe der absoluten Spitzentemperaturen eines oder mehrerer Radbremsen der Teilfahrzeuge (1, 1') ändern.

10. Anordnung nach Anspruch 9, **dadurch gekennzeichnet, dass** das Zentralsteuergerät (4, 4') oder die Auswerteeinrichtung (40, 40') aus den ermittelten Temperaturen der Radbremsen (18, 26, 18', 26') teilfahrzeugbezogene Mittelwerte bildet und diese miteinander und mit dem Temperaturgrenzwert vergleicht.

11. Anordnung nach Anspruch 9 oder 10, **dadurch gekennzeichnet, dass** das Zentralsteuergerät (4, 4') oder die Auswerteeinrichtung (40, 40') die Anhänger-Sollzuspannenergie in Abhängigkeit vom Vergleich verringert oder erhöht.

12. Anordnung nach Anspruch 9 oder 10, **dadurch gekennzeichnet, dass** das Zentralsteuergerät (4, 4') oder die Auswerteeinrichtung (40, 40') die Zugfahrzeug-Sollzuspannenergie in Abhängigkeit vom Vergleich verringert oder erhöht.

13. Anordnung nach einem der Ansprüche 9, 11 oder 12, **dadurch gekennzeichnet, dass** das Zentralsteuergerät (4, 4') oder die Auswerteeinrichtung (40, 40') bei Verringerung der Anhängefahrzeug-Sollzuspannenergie gleichzeitig die Zugfahrzeug-Sollzuspannenergie erhöht und bei Erhöhung der Anhängefahrzeug-Sollzuspannenergie gleichzeitig die Zugfahrzeug-Sollzuspannenergie verringert.

14. Anordnung nach Anspruch 13, **dadurch gekennzeichnet, dass** die Änderungen der Sollzuspannenergien der Teilfahrzeuge gesamtbremskraftneutral oder gesamtbremskraftverringernd erfolgen.

15. Anordnung nach Anspruch 9 oder 10, **dadurch gekennzeichnet, dass** die Temperatur der Radbremsen (18, 26, 18', 26') der Teilfahrzeuge (1, 1') mittels Temperatursensoren (36, 38, 36', 38') oder nach einem Temperaturmodell unter Berücksichtigung eines den Belastungszustand der Bremse repräsentierenden Lastsignals oder der Wärmeenergiezufuhr zu der Bremse oder Verformung von Bauteilen der Bremse oder der momentanen Fahrzeugverzögerung und der Fahrzeuggeschwindigkeit oder anderer geeigneter Parameter im Zentralsteuergerät (4, 4') ermittelt wird.

## Claims

1. Method of controlling brake application energy in electronically controlled braking systems (2, 2') of vehicle combinations consisting of at least one towing vehicle and trailer vehicle (1, 1'), optionally with coupling force regulation for matching, or at least substantially matching, the trailer vehicle deceleration, brought about by the trailer vehicle brake, to the towing vehicle deceleration, brought about by the towing vehicle bake (18, 26), so that, during braking, no force or only a force of admissible magnitude is transferred from the trailer vehicle (1') to the towing vehicle (1), and vice versa, via the coupling between towing and trailer vehicles (1, 1'), which method is **characterised by** the following features:
- the temperatures of the wheel brakes (18, 26, 18', 26') of the wheels of the component vehicles are ascertained and are compared vehicle-wise with one another and with a predetermined temperature threshold value,
- when temperatures differ vehicle-wise from one another at least by a predetermined value and when the temperature threshold value is exceeded by the temperatures of the wheel brakes (18, 26, 18', 26') of at least one component vehicle (1, 1'), a lower trailer vehicle brake application energy is delivered to the wheel brakes of the trailer vehicle (1') than was delivered before the temperature threshold value was exceeded if the wheel brake temperatures of the trailer vehicle (1') are higher than the wheel brake temperatures of the towing vehicle (1), and a higher trailer vehicle brake application energy is delivered to the wheel brakes of the trailer vehicle (1') than was delivered before the temperature threshold value was exceeded if the wheel brake temperatures of the trailer vehicle (1') are lower than the wheel brake temperatures of the towing vehicle (1), or a lower towing vehicle brake application energy is delivered to the wheel brakes of the towing vehicle (1) than was delivered before the temperature threshold value was exceeded if the wheel brake temperatures of the towing vehicle (1) are higher than the wheel brake temperatures of the trailer vehicle (1'), and a higher towing vehicle brake application energy is delivered to the wheel brakes of the towing vehicle than was delivered before the temperature threshold value was exceeded if the wheel brake temperatures of the towing vehicle (1) are lower than the wheel brake temperatures of the trailer vehicle (1'),
- in the case of an optionally present coupling force regulation of the kind mentioned in the preamble, the regulation aim of which is a coupling force of zero or of only small admissible magnitude, the coupling force regulation is deactivated, or there is regulated by means of the coupling force regulation a coupling force that is not zero but of a magnitude that depends on the temperature-governed changes to the brake application energies of the component vehicles (1, 1') of the vehicle combination,
- the brake application energies and the reference brake application energies, apart from being changed in dependence on the temperature difference and the temperature level, are changed in dependence on the ratio of the peak temperature of one or more wheel brakes (18, 18', 26, 26') to the average temperature of all wheel brakes of the component vehicles (1, 1') or in dependence on the level of the absolute peak temperatures of one or more wheel brakes of the component vehicles (1, 1').

2. Method according to claim 1, **characterised in that**, from the ascertained temperatures of the wheel brakes (18, 18', 26, 26'), average values relating to the component vehicles are produced which are compared with one another and with the temperature threshold value.

3. Method according to claim 1, **characterised in that** the reference brake application energy of the trailer is reduced or increased.

4. Method according to claim 1, **characterised in that** the reference brake application energy of the towing vehicle is reduced or increased.

5. Method according to claim 1, **characterised in that**, when the reference brake application energy of the trailer vehicle is reduced, the reference brake application energy of the towing vehicle is simultaneously increased and, when the reference brake application energy of the trailer vehicle is increased, the reference brake application energy of the towing vehicle is simultaneously reduced.

6. Method according to claim 5, **characterised in that** the changes made to the reference brake application energies of the component vehicles (1, 1') are neutral with respect to the total braking force.

7. Method according to claim 5, **characterised in that** the changes made to the reference brake application energies of the component vehicles (1,1') are reducing with respect to the total braking force.

8. Method according to claim 1 or 2, **characterised in that** the temperature of the wheel brakes of the component vehicles (1, 1') is ascertained by means of temperature sensors or in accordance with a temperature model taking into consideration a load signal, representing the load state of the brake, or taking into consideration the thermal energy supply to the brake or the deformation of components of the brake or the instantaneous vehicle deceleration and the vehicle speed or other suitable parameters.

9. Arrangement for carrying out the method according to one of the preceding claims having a brake value transmitter (10) and having at least one electronically controlled braking system (2, 2'), also called EBS system, for vehicle combinations consisting of at least one towing vehicle and trailer vehicle (1, 1'), optionally having a means for regulating coupling force for matching, or at least substantially matching, the trailer vehicle deceleration, brought about by the trailer vehicle brake (18', 26'), to the towing vehicle deceleration, brought about by the towing vehicle bake (18, 26), so that, during braking, no force or only a force of admissible magnitude is transferred from the trailer vehicle (1') to the towing vehicle (1), and *vice versa*, **characterised in that**
- devices (36, 38, 36', 38') are provided for ascertaining the temperatures of the wheel brakes (18, 26, 18', 26') of the wheels of the component vehicles (1, 1'), the signals of which are compared vehicle-wise with one another and with a predetermined temperature threshold value in a central control device (4, 4') of the EBS system or EBS systems (2, 2') or in at least one separate evaluation means (40, 40'), and
- the central control device (4, 4') or the separate evaluation means (40, 40') emits control signals when the ascertained temperatures differ vehicle-wise from one another by at least a predetermined value and when the temperature threshold value is exceeded by the temperatures of the wheel brakes (18, 18', 26, 26') of at least one component vehicle (1,1'), by means of which control signals a lower trailer vehicle brake application energy is delivered to the wheel brakes (18', 26') of the trailer vehicle (1') than was delivered before the temperature threshold value was exceeded if the wheel brake temperatures of the trailer vehicle (1') are higher than the wheel brake temperatures of the towing vehicle (1), and a higher trailer vehicle brake application energy is delivered to the wheel brakes (18' 26') of the trailer vehicle (1') than was delivered before the temperature threshold value was exceeded if the wheel brake temperatures of the trailer vehicle (1') are lower than the wheel brake temperatures of the towing vehicle (1), or by means of which control signals a lower towing vehicle brake application energy is delivered to the wheel brakes (18, 26) of the towing vehicle (1) than was delivered before the temperature threshold value was exceeded if the wheel brake temperatures of the towing vehicle (1) are higher than the wheel brake temperatures of the trailer vehicle (1'), and a higher towing vehicle brake application energy is delivered to the wheel brakes of the towing vehicle (1) than was delivered before the temperature threshold value was exceeded if the wheel brake temperatures of the towing vehicle (1) are lower than the wheel brake temperatures of the trailer vehicle (1'),
- wherein, in the case of an optionally present coupling force regulation, the regulation aim of which is a coupling force of zero or of only small admissible magnitude, the coupling force regulation is deactivated, or there is regulated by means of the coupling force regulation a coupling force that is not zero but of a magnitude that depends on the temperature-governed changes to the brake application energies of the component vehicles (1,1') of the vehicle combination,
- and wherein the central control device (4, 4') or the evaluation means (40, 40') additionally ascertains the peak temperatures of the wheel brakes (18, 26, 18', 26'), and the brake application energies and the reference brake application energies are changed in dependence on the ratio of the peak temperature of one or more wheel brakes to the average temperature of all wheel brakes of the component vehicles (1,1') or in dependence on the level of the absolute peak temperatures of one or more wheel brakes of the component vehicles (1, 1').

10. Arrangement according to claim 9, **characterised in that**, from the ascertained temperatures of the wheel brakes (18, 18', 26, 26'), the central control device (4, 4') or the evaluation means (40, 40') produces average values relating to the component vehicles, and compares them with one another and with the temperature threshold value.

11. Arrangement according to claim 9 or 10, **characterised in that** the central control device (4, 4') or the evaluation means (40, 40') reduces or increases the reference application energy of the trailer brake in dependence on the comparison.

12. Arrangement according to claim 9 or 10, **characterised in that** the central control device (4, 4') or the evaluation means (40, 40') reduces or increases the reference brake application energy of the towing vehicle in dependence on the comparison.

13. Arrangement according to one of claims 9, 11 and 12, **characterised in that**, in the case of a reduction in the reference brake application energy of the trailer vehicle, the central control device (4, 4') or the evaluation means (40, 40') simultaneously increases the reference brake application energy of the towing vehicle and, in the case of an increase in the reference brake application energy of the trailer vehicle, simultaneously reduces the reference brake application energy of the towing vehicle.

14. Arrangement according to claim 13, **characterised in that** the changes made to the reference brake application energies of the component vehicles are neutral with respect to the total brake force or are reducing with respect to the total brake force.

15. Arrangement according to claim 9 or 10, **characterised in that**, in the central control device (4, 4'), the temperature of the wheel brakes (18, 26, 18', 26') of the component vehicles (1, 1') is ascertained by means of temperature sensors (36, 38, 36', 38') or in accordance with a temperature model taking into consideration a load signal, representing the load state of the brake, or taking into consideration the thermal energy supply to the brake or deformation of components of the brake or the instantaneous vehicle deceleration and the vehicle speed or other suitable parameters.

## Revendications

1. Procédé en vue de la commande d'énergie d'actionnement de frein dans des systèmes de freinage à commande électronique (2, 2') de combinaisons de véhicules comportant au moins un tracteur et une remorque (1, 1'), le cas échéant muni d'une commande de force de couplage en vue de l'adaptation ou au moins de l'adaptation principale de la décélération de la remorque effectuée par les freins de la remorque à la décélération du tracteur effectuée par les freins du tracteur (18, 26), de sorte que, lors d'un freinage, aucune force ou seulement une force acceptable est transmise de la remorque (1') au tracteur (1) et réciproquement par l'intermédiaire du couplage entre le tracteur et la remorque (1, 1'), **caractérisé par** les caractéristiques suivantes :
- les températures des freins sur roues (18, 26, 18', 26') des roues des véhicules articulés sont déterminées et comparées les unes avec les autres selon le véhicule et avec une valeur limite de température prédéterminée,
- lors de températures s'écartant selon le véhicule l'une de l'autre au moins d'une valeur prédéterminée et lors du dépassement de la valeur limite de température par les températures des freins sur roues (18, 26, 18', 26') d'au moins un véhicule articulé (1, 1'), une énergie d'actionnement de frein de remorque plus faible est envoyée dans les freins sur roues de la remorque (1') comme avant le dépassement de la valeur limite de température, lorsque les températures des freins sur roues de la remorque (1') sont supérieures aux températures des freins sur roues du tracteur (1), et une énergie d'actionnement de frein de remorque plus élevée est envoyée dans les freins sur roues de la remorque (1') comme avant le dépassement de la valeur limite de température, lorsque les températures des freins sur roues de la remorque (1') sont inférieures aux températures des freins sur roues du tracteur (1) ou une énergie d'actionnement de frein du tracteur plus faible est envoyée dans les freins sur roues du tracteur (1) comme avant le dépassement de la valeur limite de température, lorsque les températures des freins sur roues du tracteur (1) sont supérieures aux températures des freins sur roues de la remorque (1'), et une énergie d'actionnement de frein du tracteur plus élevée est envoyée dans les freins sur roues du tracteur (1) comme avant le dépassement de la valeur limite de température, lorsque les températures des freins sur roues du tracteur (1) sont inférieures aux températures des freins sur roues de la remorque (1'),
- lors d'une commande de force de couplage existant le cas échéant de la technique mentionnée dans le préambule, dont le but de la commande est une force de couplage nulle ou très acceptable, la commande de force de couplage est désactivée ou une force de couplage est commandée par la commande de force de couplage, qui n'est pas nulle, mais dont l'ampleur dépend des variations liées à la température de l'énergie d'actionnement de frein du véhicule articulé (1, 1') de la combinaison de véhicules,
- les énergies d'actionnement de frein ou les énergies d'actionnement de frein de consigne sont modifiées excepté selon la différence de température et la hauteur de température selon le rapport de la température de crête d'un ou de plusieurs freins sur roues (18, 18', 26, 26') à la température moyenne de tous les freins sur roues du véhicule articulé (1, 1') ou selon la hauteur des températures de crête absolues d'un ou de plusieurs freins sur roues du véhicule articulé (1, 1').

2. Procédé selon la revendication 1, **caractérisé en ce que**, à partir des températures déterminées des freins sur roues (18, 18', 26, 26'), sont formées des valeurs moyennes ayant trait au véhicule articulé, qui sont comparées entre elles et à la valeur limite de température.

3. Procédé selon la revendication 1, **caractérisé en ce que** l'énergie d'actionnement de frein de consigne de remorque est diminuée ou augmentée.

4. Procédé selon la revendication 1, **caractérisé en ce que** l'énergie d'actionnement de frein de consigne de tracteur est diminuée ou augmentée.

5. Procédé selon la revendication 1, **caractérisé en ce que**, lors de la diminution de l'énergie d'actionnement de frein de consigne de remorque, l'énergie d'actionnement de frein de consigne du tracteur est simultanément augmentée et lors de l'augmentation de l'énergie d'actionnement de frein de consigne de remorque, l'énergie d'actionnement de frein de consigne de tracteur est simultanément diminuée.

6. Procédé selon la revendication 5, **caractérisé en ce que** les variations des énergies d'actionnement de frein de consigne du véhicule articulé (1, 1') se produisent lorsque l'ensemble de la force de freinage est neutre.

7. Procédé selon la revendication 5, **caractérisé en ce que** les variations des énergies d'actionnement de frein de consigne du véhicule articulé (1, 1') se produisent lorsque l'ensemble de la force de freinage est réduit.

8. Procédé selon la revendication 1 ou 2, **caractérisé en ce que** la température des freins sur roues du véhicule articulé (1, 1') est déterminée au moyen de capteurs de température ou d'après un modèle de température compte tenu d'un signal de charge représentant l'état de charge du frein ou de l'amenée de l'énergie thermique au frein ou de la déformation des composants du frein ou de la décélération du véhicule et de la vitesse du véhicule momentanées ou d'autres paramètres appropriés.

9. Dispositif en vue de l'application du procédé selon l'une des revendications précédentes équipé d'un transmetteur de valeur de freinage (10) et d'au moins un système de freinage à commande électronique (2, 2'), également appelé système EBS, pour des combinaisons de véhicules comportant au moins un tracteur et une remorque (1, 1'), le cas échéant équipé d'un mécanisme en vue d'une commande de force de couplage en vue de l'adaptation ou au moins de l'adaptation principale de la décélération de la remorque effectuée par les freins de la remorque (18', 26') à la décélération du tracteur effectuée par les freins du tracteur (18, 26), de sorte que, lors d'un freinage, aucune force ou seule une force acceptable est transmise de la remorque (1') au tracteur (1) et réciproquement, **caractérisé en ce que**
- des mécanismes (36, 38, 36', 38') en vue de la détermination des températures des freins sur roues (18, 26, 18', 26') des roues du véhicule articulé (1, 1') sont prévus, dont les signaux sont comparés l'un avec l'autre et avec une valeur limite de température prédéterminée dans un mécanisme de commande central (4, 4') du système EBS ou des systèmes EBS (2, 2') ou dans au moins un mécanisme d'évaluation séparé (40, 40') selon le véhicule, et
- le mécanisme de commande central (4, 4') ou le mécanisme d'évaluation séparé (40, 40') délivre des signaux de commande, lorsque les températures déterminées s'écartent l'une de l'autre d'au moins une valeur prédéterminée et la valeur limite de température est dépassée par les températures des freins sur roues (18, 18', 26, 26') au moins d'un véhicule articulé (1, 1'), par laquelle une énergie d'actionnement de frein de remorque plus faible est envoyée dans les freins sur roues (18', 26') de la remorque (1') comme avant le dépassement de la valeur limite de température, lorsque les températures des freins sur roues de la remorque (1') sont supérieures aux températures des freins sur roues du tracteur (1), et par laquelle une énergie d'actionnement de frein de remorque plus élevée est envoyée dans les freins sur roues (18', 26') de la remorque (1') comme avant le dépassement de la valeur limite de température, lorsque les températures des freins sur roues de la remorque (1') sont inférieures aux températures des freins sur roues du tracteur (1), ou une énergie d'actionnement de frein de tracteur plus faible est envoyée dans les freins sur roues (18, 26) du tracteur (1) comme avant le dépassement de la valeur limite de température, lorsque les températures des freins sur roues du tracteur (1) sont supérieures à celle des freins sur roues de la remorque (1'), et une énergie d'actionnement de frein de tracteur plus élevée est envoyée dans les freins sur roues du tracteur (1) comme avant le dépassement de la valeur limite de température, lorsque les températures des freins sur roues du tracteur (1) sont inférieures aux températures des freins sur roues de la remorque (1'),
- dans lequel, lors d'une commande d'une force de couplage existante le cas échéant, dont le but de la commande est une force de couplage nulle ou très acceptable, la commande de force de couplage est désactivée ou une force de couplage est commandée par la commande de force de couplage, qui n'est pas nulle, mais dont l'ampleur dépend des variations liées à la température de l'énergie d'actionnement de frein des véhicules articulés (1, 1') de la combinaison de véhicules,
- et dans lequel le mécanisme de commande central (4, 4') ou le mécanisme d'évaluation (40, 40') détermine de façon supplémentaire les températures de crête des freins sur roues (18, 26, 18', 26') et les énergies d'actionnement de frein ou les énergies d'actionnement de frein de consigne varient selon le rapport de la température de crête d'un ou de plusieurs freins sur roues à la température moyenne de tous les freins sur roues du véhicule articulé (1, 1') ou selon la hauteur des températures de crête absolues d'un ou de plusieurs freins sur roues du véhicule articulé (1, 1').

10. Dispositif selon la revendication 9, **caractérisé en ce que** le mécanisme de commande central (4, 4') ou le mécanisme d'évaluation (40, 40') forme des valeurs moyennes ayant trait aux véhicules articulés à partir des températures déterminées des freins sur roues (18, 26, 18', 26') et compare celles-ci les unes aux autres et à la valeur limite de température.

11. Dispositif selon la revendication 9 ou 10, **caractérisé en ce que** le mécanisme de commande central (4, 4') ou le mécanisme d'évaluation (40, 40') réduit ou augmente l'énergie d'actionnement de frein de consigne de la remorque selon la comparaison.

12. Dispositif selon la revendication 9 ou 10, **caractérisé en ce que** le mécanisme de commande central (4, 4') ou le mécanisme d'évaluation (40, 40') réduit ou augmente l'énergie d'actionnement de frein de consigne du tracteur selon la comparaison.

13. Dispositif selon l'une des revendications 9, 11 ou 12, **caractérisé en ce que** le mécanisme de commande central (4, 4') ou le mécanisme d'évaluation (40, 40') augmente simultanément l'énergie d'actionnement de frein de consigne de tracteur lors de la réduction de l'énergie d'actionnement de frein de consigne de la remorque et lors de l'augmentation de l'énergie d'actionnement de frein de consigne de remorque, réduit simultanément l'énergie d'actionnement de frein de consigne du tracteur.

14. Dispositif selon la revendication 13, **caractérisé en ce que** les variations des énergies d'actionnement de frein de consigne du véhicule articulé se produisent lorsque l'ensemble de la force de freinage est neutre ou lorsque l'ensemble de la force de freinage est réduite.

15. Dispositif selon la revendication 9 ou 10, **caractérisé en ce que** la température des freins sur roues (18, 26, 18', 26') du véhicule articulé (1, 1') est déterminée dans le mécanisme de commande central (4, 4') au moyen de capteurs de température (36, 38, 36', 38') ou d'après un modèle de température compte tenu d'un signal de charge représentant l'état de charge du frein ou de l'amenée de l'énergie thermique au frein ou de la déformation des composants du frein ou de la décélération du véhicule et de la vitesse du véhicule momentanées ou d'autres paramètres appropriés.
